**Europäisches Patentamt**

**European Patent Office**

**Office européen des brevets**

(11) Veröffentlichungsnummer: **0 312 939**

**A2**

## (12) EUROPÄISCHE PATENTANMELDUNG

(21) Anmeldenummer: **88117184.7**

(22) Anmeldetag: **15.10.88**

(51) Int. Cl.⁴: **H01M 10/50**

(30) Priorität: **23.10.87 DE 3735931**

(43) Veröffentlichungstag der Anmeldung:
**26.04.89 Patentblatt 89/17**

(84) Benannte Vertragsstaaten:
**BE DE ES FR GB IT NL SE**

(71) Anmelder: **Asea Brown Boveri**
**Aktiengesellschaft**
**Kallstadter Strasse 1**
**D-6800 Mannheim-Käfertal(DE)**

(72) Erfinder: **Eck, Gismar, Dr.**
**Alemannenstrasse 6**
**D-7500 Karlsruhe 1(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Hochtemperaturspeicherbatterie.**

(57) Um in Hochtemperaturspeicherbatterien ein Kühlmedium, z.B. Luft gleichmäßig auf Zwischenräume zwischen elektrochemischen Zellen zu verteilen, wurde bereits vorgeschlagen, oberhalb von Zellengruppen einen Freiraum vorzusehen, aus dem das Kühlmedium vorzugsweise über eine Verteilerplatte mit Löchern zu den Zellen geführt wird. Der Erfindung liegt die Aufgabe zugrunde, die Verteilung des Kühlmediums noch weiter zu verbessern.

Um ein gleichmäßiges, quasi ebenes Anströmungsprofil für das Kühlmedium über der Verteilerplatte (6) zu erreichen, wird vorgeschlagen, eine Vorkammer (7) vorzusehen, in die das Kühlmedium über mindestens eine Eintrittsöffnung (4) gelangt und von dort über mehrere Drosselstellen (8) in einen Freiraum (5) und von dort durch Löcher (12) der Verteilerplatte (6) zu den Zellen (2) strömt.

Die Erfindung kann z.B. bei Natrium/Schwefel-Batterien angewendet werden.

Fig.1

Xerox Copy Centre

## Hochtemperaturspeicherbatterie

Die Erfindung bezieht sich auf eine Hochtemperaturspeicherbatterie nach dem Oberbegriff des Anspruchs 1. Eine solche Batterie ist aus der DE-OS 32 47 969 bekannt. Dabei handelt es sich um eine Batterie mit mehreren elektrochemischen Zellen zur Speicherung elektrischer Energie. Die Batterie arbeitet bei erhöhter Temperatur, im Falle einer Natrium/Schwefel-Batterie, z.B. im Temperaturbereich von etwa 300° bis 350° C.

Um diese Temperatur aufrechterhalten zu können, ist eine hochwirksame thermische Isolierung vorgesehen. Wärmeverluste während Ruhephasen können damit gering gehalten werden. Im Lade- oder Entladebetrieb wird dagegen aufgrund des Batteriewirkungsgrades Wärme erzeugt, die zu einer Erhöhung der Zellentemperatur führt. Wenn eine obere Zellentemperatur erreicht ist, muß mit Hilfe einer Kühleinrichtung Wärme abgeführt werden.

Einzelheiten zum Aufbau einer Hochtemperaturspeicherbatterie und der Kühleinrichtung sind der genannten DE-OS 32 47 969 zu entnehmen. Daraus ist es inbesondere bekannt, eine Anordnung von mehreren elektrochemischen Zellen mit einer Platte abzudecken, die mit Löchern versehen ist. Die Platte wirkt als Verteiler für ein Kühlmedium, üblicherweise Luft. Ein dazu erforderliches Gebläse kann außerhalb der Batterie angeordnet sein. Wie den Figuren 1 und 3 bis 6 und der zugehörigen Beschreibung in der genannten Druckschrift zu entnehmen ist, gelangt die Luft über eine Eintrittsöffnung an der Batterie zunächst in einen oberen Freiraum über der Lochplatte und von dort in Zwischenräume zwischen den Zellen und schließlich zu einer Austrittsöffnung. Es sind eine Reihe von Maßnahmen angegeben, die zu einer wunschgemäßen Verteilung der Kühlluft führen sollen. Beispielsweise wurde vorgeschlagen, die Löcher in der Verteilerplatte unterschiedlich groß auszuführen, um der Ausbildung von Wärme-Nestern entgegenzuwirken. Schließlich ist der Druckschrift zu entnehmen, daß die Verteilerplatte statt oberhalb der Zellen auch unterhalb der Zellen angeordnet werden kann.

Es hat sich gezeigt, daß die bereits vorgeschlagenen Maßnahmen zwar zweckmäßig, aber noch verbesserungsfähig sind, um die erforderliche gleichmäßige Verteilung des Kühlmediums zu erzielen. Deshalb liegt der vorliegenden Erfindung die Aufgabe zugrunde, die Einrichtungen zur Führung und Verteilung des Kühlmediums in der Batterie weiter zu verbessern.

Diese Aufgabe wird bei einer Hochtemperaturspeicherbatterie nach dem Oberbegriff des Anspruchs 1 durch dessen kennzeichnende Merkmale gelöst. Vorteilhafte Ausgestaltungen sind in den Unteransprüchen angegeben.

Die erfindungsgemäße Lösung hat den Vorteil, daß in dem Freiraum - oberhalb der Verteilerplatte über den Zellen bzw. bei einer anderen Variante unterhalb der Verteilerplatte unter den Zellen - mit Hilfe der vorgeschlagenen Vorkammer ein quasi ebenes Einströmungsprofil quer zur Hauptströmrichtung durch die Verteilerplatte erreicht wird. Dieses Profil wird unabhängig von der Geschwindigkeit des Kühlmittelstromes an der Eintrittsöffnung der Batterie erreicht. Ohne die erfindungsgemäße Vorkammer stellt sich ein solches Strömungsprofil nicht ein, weil die Eintrittsöffnung im Hinblick auf eine Minimierung der Wärmeverluste möglichst klein ausgeführt werden muß und die Verteilerplatte im Freiraum über bzw. unter den Zellen relativ großflächig ist.

Ausführungsbeispiele sind in der Zeichnung dargestellt und werden nachstehend beschrieben.

Fig. 1 zeigt eine Anordnung von Zellen unterhalb der Verteilerplatte,

Fig. 2 zeigt eine Anordnung von Zellen oberhalb der Verteilerplatte.

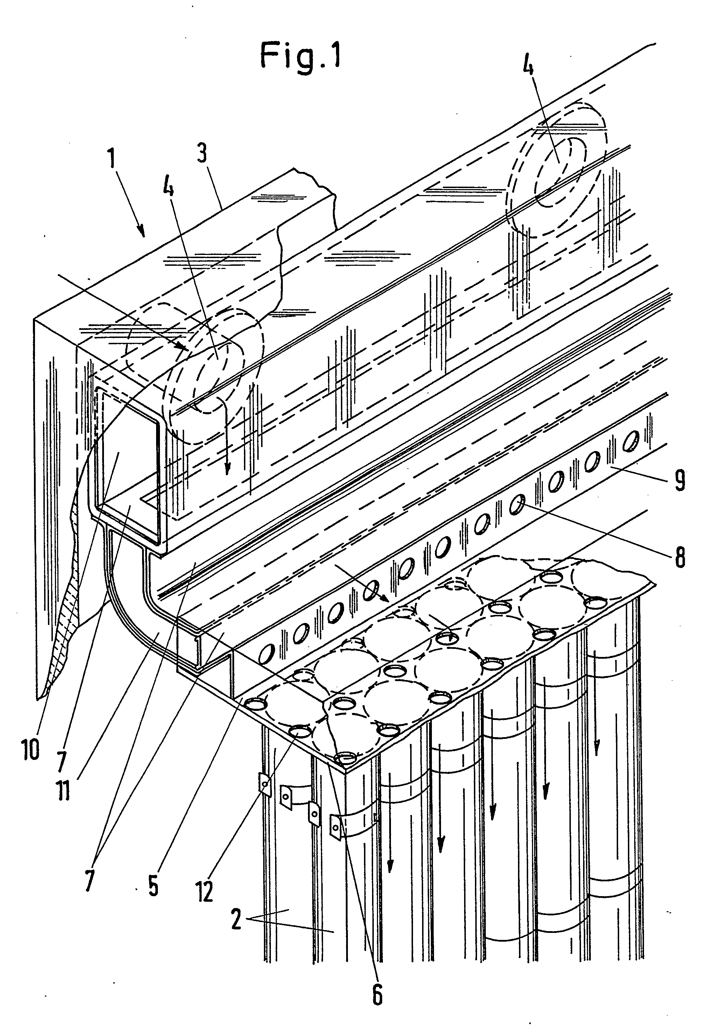

In Fig. 1 ist ein Ausschnitt aus einer Hochtemperaturspeicherbatterie 1 dargestellt. Die Batterie 1 enthält eine Anordnung mehrerer elektrochemischer Zellen 2 und ist von einer thermischen Isolierung 3 als Gehäuse umgeben. Die thermische Isolierung 3 ist an einigen Stellen durchbrochen zur Durchführung der Batteriepole, Meßleitungen und Anschlüssen für die Kühlung. Solche Durchführungen müssen möglichst klein gehalten werden und in ihrer Anzahl minimiert werden. Deshalb ist z.B. vorzugsweise nur eine Eintrittsöffnung 4 für ein Kühlmedium, z.B. Luft, vorzusehen, wobei der Querschnitt der Eintrittsöffnung 4 klein sein soll. Um trotz der dadurch gegebenen hohen Einströmgeschwindigkeit ein weitgehend gleichmäßiges ebenes Strömungsprofil in einem Freiraum 5 über einer Verteilerplatte 6 und zwar parallel zu dieser Verteilerplatte 6 zu erzielen, ist eine Vorkammer 7 vorgesehen, in der das Kühlmedium sich aufstaut und über mehrere Drosselstellen 8, z.B. Düsen oder Löcher in einer Blechblende 9 in den Freiraum 5 einströmt. Im Ausführungsbeispiel besteht die Vorkammer 7 aus einem quer zu der oder den Eintrittsöffnungen 4 liegenden Kanal 10, der in einen gekrümmten Schacht 11 übergeht und durch die mit Drosselstellen 8 versehene Lochblende 9 abgeschlossen ist. Wesentlich ist, daß das Kühlmedium an allen Drosselstellen 8 in den Freiraum 5 mit gleichem Volumenstrom einströmt. Der Weg des Kühlmediums von der Eintrittsöffnung 4 durch die Vorkammer 7 und die Drosselstellen 8 in den Freiraum 5 und von dort durch Öffnungen oder Löcher 12 in der Verteilerplatte 6 in Zwischenräume zwischen den Zellen 2 ist durch Pfeile angedeutet. In den Zellzwischenräumen nimmt das Kühlmedium die thermische Verlustleistung der benachbarten Zellen auf und gelangt über einen nicht dargestellten Sammelkanal zu einer ebenfalls nicht dargestellten Austrittsöffnung.

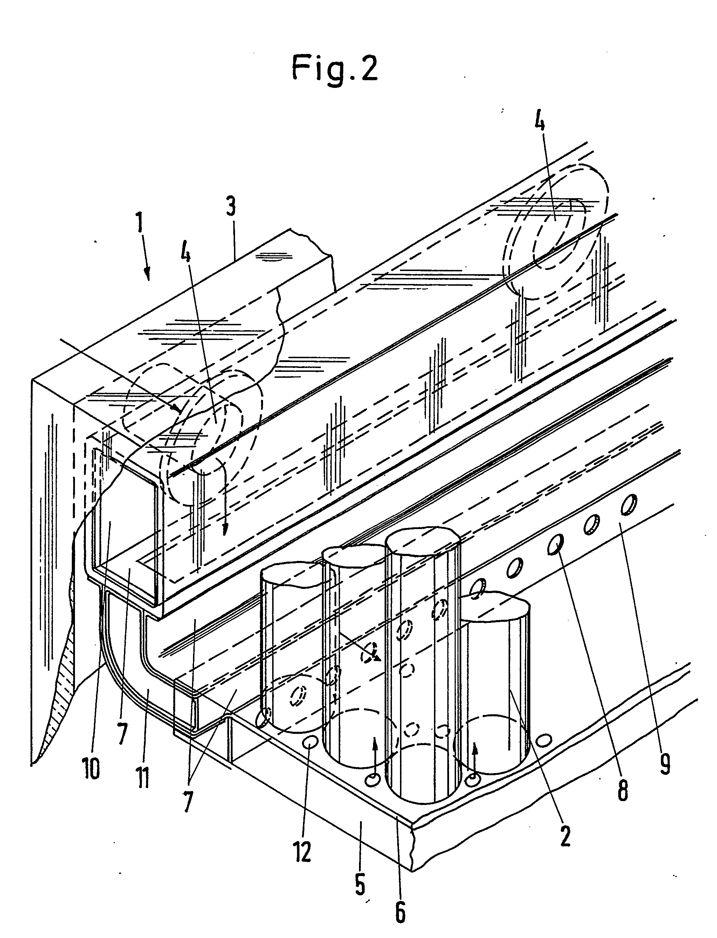

Je nach dem gewählten Batterieaufbau kann das dargestellte Wirkungsprinzip mehrfach durch in Reihe und/oder parallelgeschaltete Anordnungen angewendet werden. Außerdem sind die in der Druckschrift DE-OS 32 47 969 vorgeschlagenen Ausgestaltungen auch in Verbindung mit der vorliegenden Erfindung anwendbar. Das bedeutet insbesondere, daß die Verteilerplatte 6 auch unterhalb der Zellen 2 angeordnet sein kann. Eine solche Ausführungsvariante ist in Fig. 2 dargestellt. Dort deckt die Verteilerplatte 6 die Oberseite des Freiraums 5 ab und durch die Löcher 12 in der Verteilerplatte 6 strömt das Kühlmedium nach oben in Zwischenräume zwischen den Zellen 2.

## Ansprüche

1. Hochtemperaturspeicherbatterie (1) mit einer Anordnung von mehreren elektrochemischen Zellen (2) in einem als thermische Isolierung (3) ausgeführten Gehäuse mit Ein- und Austrittsöffnungen für ein Kühlmedium, vorzugsweise Luft, wobei das Kühlmedium von mindestens einer Eintrittsöffnung (4) in einen Freiraum (5) und von dort über eine mit Öffnungen (12) versehene Verteilerplatte (6) zu Zwischenräumen zwischen den Zellen (2) geführt ist, dadurch gekennzeichnet, daß zwischen der Eintrittsöffnung (4) und dem Freiraum (5) eine Vorkammer (7) angeordnet ist, in die die Eintrittsöffnung (4) mündet und aus der das Kühlmedium über mehrere Drosselstellen (8) in den Freiraum (5) strömt.

2. Hochtemperaturspeicherbatterie nach Anspruch 1, dadurch gekennzeichnet, daß die an den Freiraum (5) angrenzende Wand der Vorkammer (7) als Lochblechblende ausgeführt ist.

3. Hochtemperaturspeicherbatterie nach Anspruch 1, dadurch gekennzeichnet, daß die Vorkammer (7) mit den Drosselstellen (8) aus mehreren parallel und/oder in Reihe geschalteten Teilsystemen besteht.

# Fig.1

# Fig.2